# EUROPÄISCHE PATENTANMELDUNG

(11) **EP 0 702 095 A1**
(43) Veröffentlichungstag der Anmeldung: **20.03.1996**
(21) Anmeldenummer: 95202237.4
(22) Anmeldetag: 18.08.1995
(51) Int. Cl.: C22C 13/02, F16C 33/12

(54) **Legierung für Gleitlager und dergleichen, und Gleitlager auf der Grundlage dieser Legierung**

(30) Priorität: 18.08.1994 NL 9401339
(71) Anmelder: Billiton Witmetaal B.V., NL-1411 AW Naarden (NL)
(72) Erfinder: Noordegraaf, Jan, NL-3971 RB Driebergen-Rijsenburg (NL); Oud, Martinus Adrianus, NL-2925 DK Krimpen a/d IJssel (NL); Behm, Harry, NL-1411 AX Naarden (NL)
(74) Vertreter: Van Someren, Petronella F. H. M.

(57) **Abstract**

The present invention relates to an alloy for a slide bearing or the like and a bearing based on such an alloy, wherein the alloy comprises Sn, Cu, Sb, Ni, In and at least one of the group consisting of Eutinal, Ag and Ti, and wherein the alloy comprises substantially no Cd or As and wherein the alloy comprises preferably roughly 81 wt.% Sn, roughly 12 wt.% Sb and roughly 5 wt.% Cu and 0.1-0.6 wt.% Ni, preferably 0.3 wt.% Ni and 0.3-2 wt.% In, preferably 1.5 wt.% In or 0.01-0.5 wt.% Ti, preferably 0.14 wt.% Ti or 0.1-0.8 wt.% Ag preferably 0.25 wt.% Ag; and to the use of such an alloy for producing a bearing.

## Beschreibung

The present invention relates to an alloy for a slide bearing or the like and to a slide bearing based on such an alloy.

Slide bearings are used in combination with rotating axles in many mechanical applications, such as with trains.

The properties of such slide bearings are determined by the alloy from which the slide bearing is made.

Modern slide bearings should be soft enough to let an axle rotate therein and to prevent damage to the axles. The slide bearings should not however become to soft at high temperatures, since they must give sufficient support to the rotating axles at such temperatures.

Furthermore the slide bearing should possess properties which prevent blocking of an axle during working. When an axle rotates in a slide bearing, the softer slide bearing is also to a certain extend eroded away by the harder axle. Accordingly the slide bearing must be evenly eroded, otherwise problems can occur which lead to damage of the axles and to earlier replacement of the slide bearing.

Many alloys for slide bearings and the like which are presently used, are based on an Sn-alloy wherein Cd and As are present, which respectively account for the alloy having the correct hard-/softness at differing temperatures and that the structure of the alloy remains homogenous and in the form of fine drains and does not block the axles or erodes unevenly.

A problem with these alloys for slide bearings is however that during processing and use, Cd and As are released into the environment when the slide bearings are subjected to friction from the axles. This released Cd and As can then be inhaled for example by train maintenance engineers.

Cd and As are dangerous for the environment and health. Both are toxic and carcinogenic. As is also a mutagen.

An object of the present invention is to provide an alloy for a slide bearing or the like which satisfies the functional requirements of a presently used slide bearing, but yields little or no danger for the environment and/or health.

From experiments, a number of alloys have been developed. It has been found by the inventors that Cd can be replaced by In and that As can be replaced by at least one of the group consisting of Eutinal, Ag and Ti in order to yield an alloy suitable for a slide bearing or the like.

According to the present invention, an alloy for a slide bearing or the like is provided comprising Sn, Cu, Sb, Ni, In and at least one of the group consisting of Eutinal, Ag and Ti.

Accordingly an alloy for a slide bearing or the like is provided which by processing and/or eroding thereof is less dangerous for the environment and health than currently existing alloys for slide bearings and the like.

During the course of the experiments, the problem occurred of combining Sn and Ti in an alloy for a slide bearing or the like according to the present invention. Ti has a higher melting point, roughly 1500°C, with respect with Sn with a melting point of roughly 230°C and is weakly soluble in fluid Sn. At 1500°C, Sn oxidizes rapidly and the combining of Ti and Sn in order to form an alloy is not realizable.

The present invention furthermore provides a method for combining Sn and Ti in an alloy for a slide bearing or the like, wherein Sn is combined with Ti by means of a Ti salt, preferably a fluorite, at a relatively low temperature.

In this manner Ti can now be combined with Sn via a salt reaction, i.e. a chemical reaction, wherein Sn, in comparison to the high temperature desolving of Sn and Ti, does not have to be heated to the melting point of Ti.

Considering the alloy elements Sn, Cu, Sb, Ni and In, the alloy can consist of roughly 81 wt.% Sn, roughly 12 wt.% Si, roughly 3-6 wt.% Cu, 0.1-0.6 wt.% Ni preferably 0.3 wt.% Ni, and 0.3-2 wt.% In, preferably 1.5 wt.% In.

Considering the alloy element Ti, the alloy consist of 0.01-0.5 wt.%, preferably 0.04 wt.% Ti.

Considering the alloy element Ag, the alloy consists of 0.01-0.8 wt.%, preferably 0.25 wt.% Ag.

Considering the alloy addition of Eutinal (90 wt.% Zn, 5 wt.% Al and 5 wt.% Mg, see DE-A-3 135 847) the alloy can consist of 0.01-0.5 wt.%, preferably 0.04 wt.% Eutinal.

In the case of the combined use of Ag and Eutinal, for replacing As, the alloy can consist of 0.1-0.8 wt.% Ag, preferably 0.25 wt.% Ag, and 0.01-0.5 wt.% Eutinal, preferably 0.04 wt.% Eutinal.

In the case of combining use of Ti and Ag, for the replacement of As, the alloy can consist of 0.01-0.5 wt.% Ti, preferably 0.04 wt.% Ti and 0.1-0.8 wt.% Ag, preferably 0.25 wt.% Ag.

In the case of the combined use of Ti and Eutinal for replacing As, the alloy can consist of 0.01-0.5 wt.% Ti, preferably 0.04 wt.% Ti and 0.01-0.5 wt.% Eutinal, preferably 0.04 wt.% Eutinal.

It is apparent that these alloys are very interesting when used as slide bearings or the like.

The alloys used are given in the accompanying table, whereby they were visually determined for quality with respect to the currently existing slide bearing alloy (alloy 0 in the table).

The alloys were prepared in portions of roughly 30 kg.

Sn can be combined with Ti, according to the present invention, by means of a salt reaction wherein preferably Sn is reacted with a Ti fluorite salt, for example K₂TiF₆, in order to combine Ti and Sn at a lower temperature than the melting temperature of Ti. The reaction between Ti fluorite salt and Sn is thought to be as follows:

K₂TiF₆ + Sn → TiSn + (K₂SnFₓ-)

The Ti alloys (see under 4, 5, 6 and 7 in the table) were produced in two different manners.

Alloy 4 was produced by applying 85.2 g of K₂TiF₆ salt to the surface of an Sn alloy with a weight of 30 kg.

The alloys 5, 6 and 7 were produced by addition of Ti via a 0.99 wt.% Ti containing pre-alloy. This pre-alloy was previously made via mixing of 14.2 kg of K₂TiF₆ salt with 200 kg of a 99.85 wt.% alloy wherein this alloy had a Ti wt.% of 0.99 after the chemical reaction.

The K₂TiF₆ salt has a melting point of roughly 820°C and the Sn alloy was kept at a temperature of roughly 420°C. The reaction proceeds exothermically.

The K₂TiF₆ salt and the Sn pre-alloy were mixed as follows.

The Sn pre-alloy was heated, whereafter salt was introduced into this pre-alloy at a stirring rate of 300 rpm under strong stirring and at a dosing rat of around 5 kg/min (not introduced all at once) in order to ensure a good mixing. This mixture was allowed to react for 15 minutes. Subsequently the dros (K₂SnFₓ-) was removed and the quality of the alloy predicted by visual comparison with the complete existing slide bearing alloy (0 in the table) whereafter the alloy was poured into 3 kg blocks.

All the alloys appeared to have sufficient qualities to act as a base for a slide bearing or the like, however on the basis of a visual determination, the preference is for alloy 3 for use as a slide bearing.

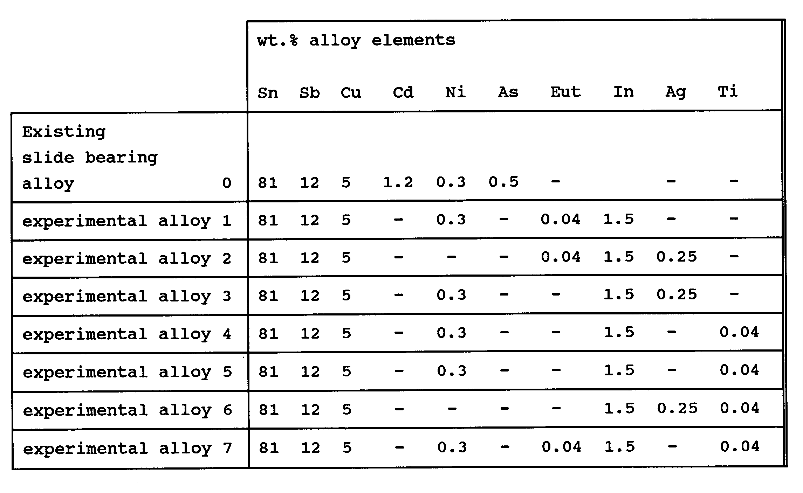

## Claims

1. Alloy for a slide bearing or the like comprising Sn, Cu, Sb, Ni, In and at least one of the group consisting of Eutinal, Ag and Ti.

2. Alloy according to claim 1, comprising substantially no Cd or As.

3. Alloy according to claims 1 or 2, comprising roughly 81 wt.% Sn, roughly 12 wt.% Sb, and roughly 5 wt.% Cu.

4. Alloy according to claims 1, 2 or 3, comprising 0.1-0.6 wt.% Ni.

5. Alloy according to claim 4, comprising 0.3 wt.% Ni.

6. Alloy according to any of the previous claims comprising 0.3-2 wt.% In.

7. Alloy according to claim 6, comprising 1,5 wt.% In.

8. Alloy according to claim 7, comprising 0.01-0.5 wt.% Ti.

9. Alloy according to claim 8, comprising 0.04 wt.% Ti.

10. Alloy according to claims 1-7, comprising 0.1-0.8 wt.% Ag.

11. Alloy according to claim 10, comprising 0.25 wt.% Ag.

12. Alloy according to claims 1-7, comprising 0.01-0.5 wt.% Eutinal.

13. Alloy according to claim 12, comprising 0.04 wt.% Eutinal.

14. Alloy according claims 1-7, comprising 0.1-0.8 wt.% Ag, preferably 0.25 wt.% Ag, and 0.01-0.5 wt.% Eutinal, preferably 0.04 wt.% Eutinal.

15. Alloy according to claims 1-7, comprising 0.01-0.5 wt.% Ti, preferably 0.04 wt.% Ti and 0.1-0.8 wt.% Ag preferably 0.25 wt.% Ag.

16. Alloy according to claims 1-7, comprising 0.01-0.5 wt.% Ti, preferably 0.04 wt.% Ti and 0.01-0.5 wt.% Eutinal, preferably 0.04 wt.% Eutinal.

17. Method for combining Ti and Sn in an alloy for a slide bearing or the like according to claims 1-16, wherein Ti and Sn are combined by means of a salt reaction.

18. Method according to claim 17, wherein Sn is reacted with a Ti-fluorite salt in order to combine Sn with Ti.

19. Bearing such as a slide bearing or the like based on an alloy according to claims 1-16.

20. Use of an alloy according to claims 1-16, for producing a bearing according to claim 19.
